# EUROPÄISCHE PATENTSCHRIFT

(11) **EP 3 082 118 B1**
(45) Veröffentlichungstag und Bekanntmachung des Hinweises auf die Patenterteilung: **24.07.2019**
(21) Anmeldenummer: 16000788.6
(22) Anmeldetag: 07.04.2016
(51) Int. Cl.: H04Q 9/00

(54) **VERFAHREN ZUR DATENÜBERTRAGUNG ZWISCHEN MESSEINRICHTUNGEN UND EINER DATENVERARBEITUNGSEINRICHTUNG IN EINEM MESSDATENERFASSUNGSSYSTEM**
METHOD FOR TRANSMITTING DATA BETWEEN MEASURING DEVICES AND A DATA PROCESSING SYSTEM IN A MEASUREMENT DATA RECORDING DEVICE
PROCEDE DE TRANSMISSION DE DONNEES ENTRE DES DISPOSITIFS DE MESURE ET UN DISPOSITIF DE TRAITEMENT DE DONNEES DANS UN SYSTEME D'ENREGISTREMENT DE DONNEES DE MESURE

(30) Priorität: 14.04.2015 DE 102015004578
(43) Veröffentlichungstag der Anmeldung: 19.10.2016
(73) Patentinhaber: Dräger Safety AG & Co. KGaA, 23560 Lübeck (DE)
(72) Erfinder: Möbusz, Andreas, 23564 Lübeck (DE); Müller, Johannes, 23556 Lübeck (DE)
(74) Vertreter: Mildner, Volker

(56) Entgegenhaltungen:
- EP-A1- 2 315 089
- EP-A2- 1 253 494
- DE-A1-102013 107 905

## Beschreibung

Die vorliegende Erfindung, betrifft ein Verfahren zur Datenübertragung zwischen Messeinrichtungen und einer Datenverarbeitungseinrichtung in einem Messdatenerfassungssystem, das eine Vielzahl von Messeinrichtungen und wenigstens einen Controller aufweist, wobei jeder aus der Vielzahl von Messeinrichtungen eine eindeutige Kennung zugewiesen ist und wobei zwischen jeder Messeinrichtung und dem Controller eine Messleitung vorgesehen ist, die Messeinrichtungen über die Messleitungen analoge Messsignale an den Controller senden und zwischen dem Controller und den Messeinrichtungen digitale Nachrichten über die Messleitungen ausgetauscht werden.

Aus dem Stand der Technik ist es bekannt, eine Mehrzahl von Messeinrichtungen, die räumlich verteilt angeordnet sind, über Messleitungen mit einem zentralen Controller zu verbinden. Jede der Messeinrichtungen verfügt über zumindest ein Messelement, mit dem ein Messwert gemessen wird. Dieser Messwert wird über die Messleitungen an den Controller analog, d.h. als analoges Strom- oder Spannungssignal, übertragen, da analoge Übertragungen oftmals robuster sind als digitale. Um gleichzeitig weitere Parameter der Messeinrichtungen abzufragen oder einzustellen, kann der Controller über die Messleitung digital mit solchen Messeinrichtungen kommunizieren, die für eine solche digitale Kommunikation eingerichtet sind und die außerdem an einem dazu ausgestalteten Anschluss des Controllers angeschlossen sind. Hierzu sendet der Controller eine digitale Nachricht an ein Kommunikationselement der Messeinrichtung, das wiederum auf die digitale Nachricht des Controllers mit einer eigenen digitalen Nachricht antworten kann. Hierzu kann beispielsweise auf das analoge Strom- oder Spannungssignal, mit dem ein Messwert von der Messeinrichtung an den Controller übertragen wird, ein höherfrequentes Signal zur Datenübertragung aüfmoduliert werden, beispielsweise bei 1200 Hz oder 2200 Hz. Die digitalen Nachrichten können beispielsweise verwendet werden, um einen Zustand einer Messeinrichtung abzufragen oder eine Kalibrierung der Messeinrichtung vorzunehmen.

Ein Beispiel für eine derartiges System aus einer Mehrzahl von Messeinrichtungen und einem zentralen Controller ist eine verteilte Gasmessanlage, bei der eine Mehrzahl von Gasmesssensoren als Messeinrichtungen verteilt über eine Produktionsanlage angeordnet sind. Die Gasmesssensoren messen beispielsweise eine Konzentration eines explosiven oder gesundheitsgefährdenden Gases in der Umgebungsluft und melden die gemessenen Konzentrationen an den zentralen Controller. Ein Beispiel für ein Kommunikationsprotokoll, gemäß dem die Kommunikation zwischen dem Controller und den Messeinrichtungen abgewickelt werden kann, ist das HART-Protokoll.

Die Kommunikation über das HART-Protokoll bzw. die digitale Kommunikation über die analoge Messleitung kann allerdings auch verwendet werden, um die Messeinrichtungen zu warten oder eben zu kalibrieren. Hierzu werden regelmäßig tragbare Datenverarbeitungseinrichtungen wie Laptops oder Mobiltelefone mit spezieller Hardware ausgestattet, die es ermöglicht, die Datenverarbeitungseinrichtung direkt über eine Leitung mit einer Messeinrichtung zu verbinden. Beispielsweise wird dazu zunächst die Verbindung zwischen der Messeinrichtung und dem zentralen Controller getrennt und stattdessen die Messeinrichtung direkt mit der Datenverarbeitungseinrichtung verbunden. Dies ist jedoch mit einem großen zeitlichen und technischen Aufwand verbunden. Zum einen wird teure Spezialhardware benötigt, die über das HART-Protokoll kommunizieren kann, zum anderen muss sich ein Wartungstechniker Zugang zu jeder Messeinrichtung verschaffen, eine physische Verbindung zu der Messeinrichtung herstellen und die Wartung und Kalibrierung vor Ort vornehmen.

Außerdem können die Messeinrichtungen über den Controller mit der Datenverarbeitungseinrichtung verbunden werden, sodass es nicht mehr erforderlich ist, dass der Wartungstechniker zumindest unmittelbar an die zu den Messeinrichtungen laufenden Messleitungen gelangen muss. Allerdings hat diese Vorgehensweise den Nachteil, dass zur Wartung oder Kalibrierung entweder das gesamte Messsystem außer Betrieb genommen werden muss und während der Zeit der Wartung oder Kalibrierung einzelner Messeinrichtung möglicherweise sicherheitsrelevante Funktionen deaktiviert sind, oder zumindest einzelne Anschlüsse des Controllers und die damit verbundenen Messeinrichtungen müssen deaktiviert werden, sodass zumindest diese Messeinrichtungen dann außer Betrieb sind.

Das Dokument EP 2 315 089 A1 offenbart ein Konzept zur Entlastung oder Signalisierungseinsparung in einem Feldbussystem. Ein Aufzeichnungsmodul zeichnet Befehle oder Befehlssequenzen auf, die dann wiederholt werden können.

Es ist daher die Aufgabe der vorliegenden Erfindung, eine Kommunikationsmöglichkeit in einem eingangs beschriebenen Messdatenerfassungssystem bereitzustellen, mit der auch während des laufenden Überwachungsbetriebs einzelne Messeinrichtungen kalibriert oder von extern geprüft oder konfiguriert werden können.

Gemäß der vorliegenden Erfindung wird ein Verfahren zur Datenübertragung zwischen Messeinrichtungen und einer Datenverarbeitungseinrichtung in einem Messdatenerfassungssystem vorgeschlagen, wobei das System eine Vielzahl von Messeinrichtungen und wenigstens einen Controller aufweist, wobei jeder aus der Vielzahl von Messeinrichtungen eine eindeutige Kennung zugewiesen ist, wobei zwischen jeder Messeinrichtung und dem Controller eine Messleitung vorgesehen ist, die Messeinrichtungen über die Messleitungen analoge Messsignale an den Controller senden und zwischen dem Controller und den Messeinrichtungen digitale Nachrichten über die Messleitungen ausgetauscht werden, wobei der Controller einen Anschluss aufweist, über den die Datenverarbeitungseinrichtung mit dem Controller verbunden ist, sodass der Controller digitale Datenpakete von der Datenverarbeitungseinrichtung empfängt und digitale Datenpakete an die Datenverarbeitungseinrichtung sendet, und wobei das Verfahren Folgendes umfasst: '
- Wiederholtes Durchführen von Austauschschritten durch den Controller, wobei ein Austauschschritt das Empfangen analoger Messsignale von den Messeinrichtungen und/oder das digitale Austauschen digitaler Nachrichten zwischen den Messeinrichtungen und dem Controller umfasst und wobei die Austauschschritte in einem vorgegebenen zeitlichen Abstand begonnen werden,
- Senden eines ersten digitalen Datenpakets durch die Datenverarbeitungseinrichtung an den Controller, wobei das erste digitale Datenpaket die Kennung von einer aus der Vielzahl von Messeinrichtungen und eine erste digitale Nachricht enthält,
- Extrahieren der Kennung aus dem digitalen Datenpaket durch den Controller, und
- Senden der ersten digitalen Nachricht an die eine aus der Vielzahl von Messeinrichtungen durch den Controller nach Beendigung des digitalen Austauschens.

Bei dem erfindungsgemäßen Verfahren können in vorgegebenen zeitlichen Abständen im Rahmen der.Austauschschritte wiederholt die von den Messeinrichtungen ausgegebenen analogen Messsignale durch den Controller abgefragt und dahingehend geprüft werden, ob möglicherweise Schwellwerte überschritten sind, sodass ein Alarm ausgegeben werden kann. Vorzugsweise ist der zeitliche Abstand immer gleich groß. Es ist aber auch denkbar, dass der Abstand zwischen dem Beginn zweier aufeinanderfolgender Austauschschritte variiert. Außerdem kann im Rahmen der Austauschschritte eine digitale Kommunikation, nämlich ein digitales Austauschen, zwischen den Messeinrichtungen und dem Controller erfolgen. Die digitalen Nachrichten können dabei in der Weise übertragen werden, dass auf das analoge Strom- oder Spannungssignal, mit dem der von einer Messeinheit einer Messeinrichtung gemessene Messwert übertragen wird, ein höherfrequentes Signal zur digitalen Datenübertragung aufmoduliert wird.,

In dem zwischen dem zwischen dem digitalen Austauschen verbleibenden Zeitraum werden in von der Datenverarbeitungseinrichtung an den Controller gesandten Datenpaketen enthaltene digitale Nachrichten von dem Controller an die Messeinrichtung gesandt, deren Kennung ebenfalls in dem digitalen Datenpaket enthalten war. Bei diesen digitalen Nachrichten kann es sich um Kalibrierungsbefehle oder andere Abfragen oder Befehle handeln. Damit wird bei dem erfindungsgemäßen Verfahren der eigentliche Betrieb des Controllers nicht unterbrochen.

Der Controller fungiert damit außerdem auf vorteilhafte Weise als Mittler zwischen zwei unterschiedlichen Übertragungsprotokollen. Während die Datenverarbeitungseinrichtung beispielsweise ein herkömmlicher PC bzw. Laptop ist, die über eine Netzwerkkarte verfügen und damit kostengünstig sind, übernimmt der Controller sämtliche Kommunikation mit den Messeinrichtungen.

In einer bevorzugten Ausführungsform des erfindungsgemäßen Verfahrens sendet die eine Messeinrichtung eine digitale Antwortnachricht als Antwort auf die von dem Controller gesendete erste digitale Nachricht an den Controller, und der Controller sendet die digitale Antwortnachricht in einem digitalen Antwort-Datenpaket an die Datenverarbeitungseinrichtung. Somit wird ermöglicht, dass die Datenverarbeitungseinrichtung während des laufenden Betriebs des Messdatenerfassungssystems eine Rückmeldung von der Messeinrichtung erhält, die mit dem ursprünglich gesendeten digitalen Datenpaket angesprochen worden war. Allerdings kann das Verfahren in einem flexiblen Duplex-Modus betrieben werden, in dem nicht stets eine Antwort auf eine digitale Nachricht abgewartet werden muss, bevor die nächste digitale Nachricht von der Datenverarbeitungseinrichtung in einem Datenpaket gesendet werden kann.

Weiterhin ist es bevorzugt, wenn der Controller nach Beendigung eines digitalen Austauschens die freie Zeit bestimmt, die bis zum Beginn des nächsten digitalen Austauschens verbleibt, und mit einer ersten Sendedauer vergleicht, die für das Senden der ersten digitalen Nachricht an die eine Messeinrichtung benötigt wird, wobei die erste digitale Nachricht gesendet wird, wenn die freie Zeit größer als die erste Sendedauer ist, und wobei das Senden der ersten digitalen Nachricht nach dem Durchführen des nächsten digitalen Austauschens erfolgt, wenn die freie Zeit kleiner als die erste Sendedauer ist.

Auf diese Weise wird sichergestellt, dass nur dann ein Sendevorgang der ersten digitalen Nachricht gestartet wird, wenn die dafür verbleibende Zeit bis dem nächsten Austauschschritt auch ausreichend ist. Dabei ist zu berücksichtigen, dass das digitale Austauschen aufgrund von unterschiedlichen Längen der jeweils zwischen dem Controller und den Messeinrichtungen übertragenen Nachrichten und aufgrund der wegen der großen räumlichen Abstände zwischen dem Controller und den Messeinrichtungen erforderlichen Wiederholungen variieren. Daher kommt es zu unterschiedlichen Dauern des digitalen Austauschens, und dies wird bei der vorliegenden bevorzugten Ausführungsform ausgenutzt, indem eine Übertragung einer von der Datenverarbeitungseinrichtung gesendeten digitalen Nachricht solange zurückgestellt wird, bis dafür ausreichend Zeit zur Verfügung steht.

Hier ist es weiter bevorzugt, wenn die erste digitale Nachricht in einem Schiebespeicher gespeichert wird, wobei der Controller nach Beendigung eines digitalen Austauschens die freie Zeit bestimmt, die bis Beginn des nächsten digitalen Austauschens verbleibt, und mit einer ersten Sendedauer vergleicht, die für das Senden der nächsten, vom Schiebespeicher ausgegebenen digitalen Nachricht an die eine Messeinrichtung benötigt wird, und wobei die nächste, vom Schiebespeicher ausgegebene digitale Nachricht gesendet und aus dem Schiebespeicher gelöscht wird, wenn die freie Zeit größer als die erste Sendedauer ist. Bei einem Schiebespeicher wird ausgenutzt, dass die digitalen Nachrichten in der Reihenfolge des Abspeicherns darin auch wieder ausgegeben werden. Damit dient der Schiebespeicher also als Puffer, der aber nicht die Reihenfolge des Versendens der digitalen Nachrichten gegenüber der bei deren Eingang bei dem Controller ändert.

Wenn ein zweites digitales Datenpaket durch die Datenverarbeitungseinrichtung an den Controller gesendet wird, wobei das zweite digitale Datenpaket die Kennung von einer zweiten aus der Vielzahl von Messeinrichtungen und eine zweite digitale Nachricht enthält, wird die zweite digitale Nachricht in dem Schiebespeicher gespeichert, wobei, wenn in dem Schiebespeicher keine weiteren digitalen Nachrichten gespeichert sind, der Controller die verbleibende zweite freie Zeit, die bis zum nächsten digitalen Austauschen verbleibt, mit einer zweiten Sendedauer vergleicht, die für das Senden der zweiten digitalen Nachricht an die zweite Messeinrichtung benötigt wird, und wobei die zweite digitale Nachricht an die zweite Messeinrichtung gesendet und aus dem Schiebespeicher gelöscht wird, wenn die zweite freie Zeit größer als die zweite Sendedauer ist, und wobei, wenn weitere digitale Nachrichten in dem Schiebespeicher vorhanden sind, die zweite freie Zeit, die bis zum nächsten digitalen Austauschen verbleibt, mit der Sendedauer verglichen wird, die für das Versenden der nächsten, aus dem Schiebespeicher ausgegebenen digitalen Nachricht benötigt wird, und diese Nachricht versendet und aus dem Schiebespeicher gelöscht wird, wenn die zweite freie Zeit größer als diese Sendedauer ist.

Damit wird ermöglicht, eine Vielzahl am Controller eintreffender digitaler Datenpakete in der zwischen den digitalen Austauschschritten zur Verfügung stehenden Zeit effizient zu verarbeiten.

In einer weiteren bevorzugten Ausführungsform des erfindungsgemäßen Verfahrens sendet die Datenverarbeitungseinrichtung ein digitales Datenpaket an den Controller, wobei das digitale Datenpaket die Kennung von einer aus der Vielzahl von Messeinrichtungen, ein Anfangssignal und eine erste digitale Nachricht enthält, wobei das wiederholte Durchführen.des digitalen Austauschens durch den Controller unterbrochen wird, wobei der Controller die Kennung aus dem digitalen Datenpaket extrahiert und die digitale Nachricht an die eine Messeinrichtung sendet, wobei die Datenverarbeitungseinrichtung weitere digitale Datenpakete mit digitalen Nachrichten an den Controller sendet und der Controller die digitalen Nachrichten an die eine Messeinrichtung sendet, wobei die Datenverarbeitungseinrichtung ein digitales Datenpaket mit einer digitalen Nachricht und einem Endesignal an den Controller sendet und wobei das wiederholte Durchführen des digitalen Austauschens, das in einem vorgegebenen zeitlichen Abstand begonnen wird, durch den Controller wieder aufgenommen wird.

Bei dieser Ausführungsform kann der Normalbetrieb des Messdatenerfassungssystems zur Kommunikation zwischen wenigstens ei-, ner Messeinrichtung und der Datenverarbeitungseinrichtung unterbrochen werden, wobei nach dem Empfang des Anfangssignals ein Tunnel zwischen der Datenverarbeitungseinrichtung und der Messeinrichtung aufgebaut wird und die Übertragung dann nicht durch die Austauschschritte unterbrochen ist.

Die vorliegende Erfindung wird nachfolgend anhand einer lediglich ein bevorzugtes Ausführungsbeispiel darstellende Zeichnung beschrieben, wobei
- Fig. 1: eine schematische Darstellung eines ersten Ausführungsbeispiels eines Messdatenerfassungssystems zur Durchführung des erfindungsgemäßen Verfahrens zeigt und
- Fig. 2: eine schematische Darstellung eines zweiten Ausführungsbeispiels eines Messdatenerfassungssystems zur Durchführung des erfindungsgemäßen Verfahrens zeigt.

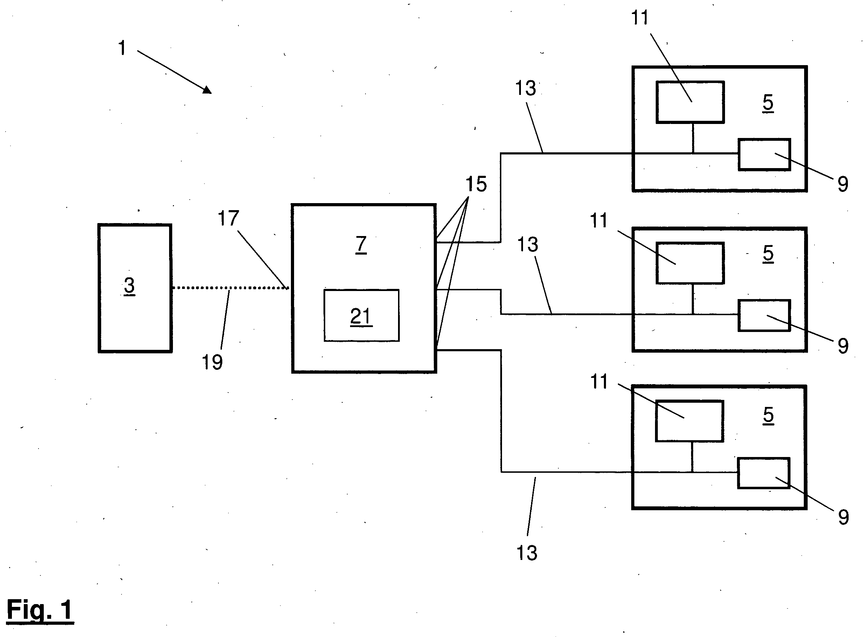

Unter Bezugnahme auf Fig. 1 wird ein erstes Ausführungsbeispiel eines Messdatenerfassungssystems 1 zur Bereitstellung einer Kommunikationsmöglichkeit zwischen einer Datenverarbeitungseinrichtung 3 und drei Messeinrichtungen 5 über einen Controller 7 beschrieben, wobei damit ein Ausführbeispiel eines erfindungsgemäßen Verfahrens ausgeführt wird. Bei der Datenverarbeitungsvernichtung 3 kann es sich beispielsweise um einen PC wie einen Laptop, einen Tablet-Computer oder ein Smartphone handeln.

Jede der Messeinrichtungen 5, die beispielsweise Gasmesseinrichtungen 5 zur Messung einer Gaskonzentration in einer Umgebungsluft sind, weist ein Messelement 9 und ein Kommunikationselement 11 auf. Die Messeinrichtungen 5 sind über analoge Messleitungen 13 mit Anschlüssen 15 des Controllers 7 verbunden. Die Messelemente 9 bestimmen beispielsweise die Konzentrationen eines explosionsgefährlichen oder gesundheitsschädlichen Gases in der Umgebungsluft. Die bestimmte Konzentration, d.h. der bestimmte Messwert, wird als analoges Spannungs- oder Stromsignal über die Messleitungen 13 und die Anschlüsse 15 an den Controller 7 übertragen. Die Verwendung von analogen Spannungs- oder Stromsignalen zur analogen Übertragung der gemessenen oder bestimmten Messwerte hat sich als besonders robust erwiesen.

Gleichzeitig weisen die Messeinrichtungen 5 jedoch auch die Kommunikationselemente 11 auf, die ebenfalls mit der analogen Messleitung 13 verbunden sind und über diese Messleitung 13 digitale Nachrichten mit dem Controller 7 austauschen können. Beispielsweise kann ein Controller 7 über eine digitale Nachricht einen Zustand einer Messeinrichtung 5 abfragen. Um über die analogen Messleitungen 13 digitale Nachrichten zu übertragen, wird auf das analoge Spannungs- oder Stromsignal ein höherfrequentes Datensignal aufmoduliert, wobei Frequenzen von 1200 Hz oder 2200 Hz verwendet werden können. Die Kommunikation zwischen dem Controller 7 und den Messeinrichtungen 5 kann beispielsweise gemäß des HART-Protokolls durchgeführt werden. Auch wenn dies in Fig. 1 nicht dargestellt ist, kann das System 1 weitere Elemente oder Einheiten umfassen, die ebenfalls über die Messleitungen 13 mit den Messeinrichtungen 5 oder dem Controller 7 verbunden sind und ebenfalls über das HART-Protokoll miteinander und mit den Messeinrichtungen 5 und dem Controller 7 kommunizieren. Das HART-Protokoll enthält hierfür sogenannte Verhandlungsregeln ("Arbitration rules"), nach denen bestimmt wird, unter welchen Voraussetzungen konkurrierende HART-fähige Vorrichtungen untereinander kommunizieren können.

Jeder der mit dem Controller 7 verbundenen Messeinrichtungen 5 ist eine Kennung oder Adresse zugewiesen, wobei diese Zuweisung der Adresse vorzugsweise in Abhängigkeit einer eindeutigen Kennung der Messeinrichtung 5, beispielsweise einer Macadresse, erfolgt. So kann der Controller 7 digitale Nachrichten den verschiedenen Messeinrichtungen 5 über die Adresse bzw. Kennung eindeutig zuweisen bzw. an diese senden, unabhängig davon, an welchem konkreten Anschluss 15 die jeweilige Messeinrichtung 5 angeschlossen ist. Auf diese Weise wird verhindert, dass bei einem Anschluss einer Messeinrichtung 5 an einen verkehrten Anschluss 15 die von den Messelementen 9 bestimmten bzw. gemessenen Werte falschen Messorten zugeordnet werden.

Der Controller 7 umfasst weiterhin einen Anschluss 17, über den der Controller 7 mit der Datenverarbeitungseinrichtung 3 verbunden werden kann. In dem Ausführungsbeispiel in Fig. 1 ist der Anschluss 17 ein gewöhnlicher Ethernetport, an dem die Datenverarbeitungseinrichtung 3 mit einem Ethernetkabel 19 angeschlossen ist.

Allerdings ist auch denkbar, dass der Anschluss 17 beispielsweise ein WLAN-Modul, ein Bluetooth-Modul oder ein andersartiges Funkmodul ist und die Datenverarbeitungseinrichtung 3 drahtlos mit dem Controller 7 verbunden wird. Die Kommunikation zwischen dem Controller 7 und der Datenverarbeitungseinrichtung 3 erfolgt in dem Ausführungsbeispiel gemäß einem vorgebenen Protokoll. Sowohl die Datenverarbeitungseinrichtung 3 als auch der Controller 7 verfügen über eine Netzwerkkarte, über die sie TCP/IP-Datenpakete empfangen und senden können.

Schließlich ist in dem Controller 7 ein als First-in-firstout-Speicher ausgebildeter Schiebespeicher 21 vorgesehen, d.h. darin gespeicherte Nachrichten werden in der Reihenfolge, wie sie in dem Schiebespeicher 21 abgespeichert worden sind, auch wieder daraus ausgegeben.

Bei dem Ausführungsbeispiel des erfindungsgemäßen Verfahrens zur Datenübertragung zwischen den Messeinrichtungen 5, dem Controller 7 und der Datenverarbeitungseinrichtung 3 in dem Messdatenerfassungssystem 1 werden in einem vorgegebenen zeitlichen Abstand von dem Controller 7 Austauschschritte ausgeführt, wobei der zeitliche Abstand hier in bevorzugter Weise konstant ist und wobei ein Austauschschritt das Empfangen analoger Messsignale von den Messeinrichtungen 5 und/oder das digitale Austauschen digitaler Nachrichten zwischen den Messeinrichtungen 5 und dem Controller 7 umfasst. Dieser Austausch von digitalen Nachrichten kann unter anderem das Abfragen von Betriebsparametern der Messelemente 9 der Messeinrichtungen 5 umfassen. Im Rahmen eines Austauschschrittes können außerdem die mittels eines analogen Spannungs- oder Stromsignals übermittelten Messwerte für eine Gaskonzentration mit Schwellenwerten verglichen und ggf. Aktoren wie Warnleuchten oder Sirenen aktiviert werden, wenn Schwellenwerte überschritten sind. Die Austauschschritte beinhalten also die für den normalen Dauerbetrieb des Messdatenerfassungssystems 1 notwendigen Schritte.

Während der wiederholten periodischen Ausführung der Austauschschritte kann die Datenverarbeitungseinrichtung 3 ein erstes digitales Datenpaket über die Verbindung 19 und den Anschluss 17 an den Controller 7 senden, wobei dieses erste digitale Datenpaket in einem Header die Kennung von einer der Messeinrichtungen 5 und als Payload eine erste digitale Nachricht enthält.

Nach Beendigung des digitalen Austauschens extrahiert der Controller 7 die Kennung aus dem ersten digitalen Datenpaket und speichert die in dem ersten digitalen Datenpaket enthaltene erste digitale Nachricht zusammen mit der Kennung in dem Schiebespeicher 21. Anschließend wird eine dort gespeicherte digitale Nachricht aus dem Schiebespeicher 21 wieder ausgelesen, und sofern dort nicht schon weitere digitale Nachrichten gespeichert waren, wird die unmittelbar zuvor gespeicherte Nachricht wieder ausgegeben (und damit in dem Schiebespeicher gelöscht) und an die Messeinrichtung 5, der die extrahierte Kennung zugewiesen ist, gesendet.

Bei der in dem ersten digitalen Datenpaket enthaltenen ersten digitalen Nachricht kann es sich um einen Steuerbefehl beispielsweise zum Kalibrieren handeln, der von dem Kommunikationselement 11 erfasst und an die Steuerung der Messeinrichtung 5 übermittelt wird.

Da das Senden nach der Beendigung des digitalen Austauschens und vor dem darauf folgenden Austauschschritt erfolgt, wird der normale Betrieb des Messdatenerfassungssystems 1 dadurch nicht gestört.

Um allerdings sicherzustellen, dass es zu keiner Unterbrechung des Normalbetriebs kommt, wird nach Beendigung des digitalen Austauschens und nach Empfang des ersten digitalen Datenpakets zunächst durch den Controller 7 die freie Zeit bestimmt, die bis zum Beginn des nächsten digitalen Austauschens verbleibt, und diese freie Zeit wird mit einer ersten Sendedauer verglichen, die für das Senden der aus dem Schiebespeicher 21 als nächstes ausgegebenen, in diesem Fall ersten, digitalen Nachricht an die Messeinrichtung 5 benötigt wird.

Nur dann, wenn die freie Zeit größer als die erste Sendedauer ist, wird die nächste digitale Nachricht tatsächlich auch aus dem Schiebespeicher 21 ausgelesen und noch vor dem nächsten Austauschschritt gesendet. Andernfalls, wenn die freie Zeit kleiner als die erste Sendedauer ist, erfolgt das Senden der ersten digitalen Nachricht frühestens nach dem Durchführen des nächsten digitalen Austauschens.

Nach dem nächsten Austauschschritt und sofern in dem Schiebespeicher 21 eine Nachricht gespeichert ist, wird wiederum die bis zum nächsten folgenden digitalen Austauschen verbleibende weitere freie Zeit bestimmt und mit der Sendedauer verglichen, die benötigt wird, um die in dem Schiebespeicher 21 noch gespeicherte digitale Nachricht zu versenden. Die gespeicherte ggf. erste digitale Nachricht wird an die erste Messeinrichtung gesendet und aus dem Schiebespeicher 21 gelöscht, wenn die weitere freie Zeit größer als die erste Sendedauer ist. Ansonsten bleibt die digitale Nachricht zunächst in dem Schiebespeicher, bis der nächste digitale Austauschschritt ausgeführt ist.

An dieser Stelle ist darauf hinzuweisen, dass die Dauer der digitalen Austauschschritte aufgrund von unterschiedlichen Längen der jeweils zwischen dem Controller 7 und den Messeinrichtungen 5 übertragenen Nachrichten und aufgrund der wegen der großen räumlichen Abstände zwischen dem Controller 7 und den Messeinrichtungen 5 erforderlichen Wiederholungen variiert. Daher kommt es zu unterschiedlichen Dauern der digitalen Austauschschritte, und dies wird bei der hier beschriebenen Ausführungsform des erfindungsgemäßen Verfahrens ausgenutzt, indem eine Übertragung einer von der Datenverarbeitungseinrichtung 3 gesendeten digitalen Nachricht solange zurückgestellt wird, bis dafür ausreichend Zeit zur Verfügung steht.

Wenn nach dem ersten digitalen Datenpaket ein zweites digitales Datenpaket, das die Kennung von einer zweiten Messeinrichtung 5 und eine zweite digitale Nachricht enthält, durch die Datenverarbeitungseinrichtung 3 an den Controller 7 gesendet wird, wird nach dem Extrahieren die zweite digitale Nachricht zusammen mit der Kennung in dem Schiebespeicher 21 gespeichert.

Sofern in dem Schiebespeicher 21 keine weiteren digitalen Nachrichten gespeichert sind, bestimmt der Controller 7 anschließend die verbleibende zweite freie Zeit, die bis zum nächsten digitalen Austauschschritt verbleibt. Diese zweite freie Zeit wird mit einer zweiten Sendedauer verglichen, die für das Senden der zweiten digitalen Nachricht an die zweite Messeinrichtung 5 benötigt wird, und die zweite digitale Nachricht wird an die zweite Messeinrichtung 5 gesendet wird (und aus dem Schiebespeicher 21 gelöscht), wenn die zweite freie Zeit größer als die zweite Sendedauer ist. Andernfalls verbleibt die zweite digitale Nachricht in dem Schiebespeicher 21, bis der nächste digitale Austauschschritt ausgeführt worden ist.

Wenn noch digitale Nachrichten in dem Schiebespeicher 21 vorhanden sind, wird die zweite freie Zeit mit der Sendedauer verglichen, die für das Versenden der nächsten, aus dem Schiebespeicher 21 ausgegebenen digitalen Nachricht benötigt wird, und diese Nachricht wird versendet, wenn die zweite freie Zeit größer als diese Sendedauer ist. Diese Vorgehensweise wiederholt sich solange, wie die jeweilige noch verbleibende freie Zeit größer als die Sendedauer der als nächstes aus dem Schiebespeicher 21 ausgegebenen digitalen Nachricht ist.

Wenn diejenige Messeinrichtung 5, an die eine digitale Nachricht gesendet worden war, eine digitale Antwortnachricht an den Controller 7 sendet, sendet der Controller 7 die digitale Antwortnachricht in einem digitalen Antwort-Datenpaket an die Datenverarbeitungseinrichtung 3 zurück. Damit kann.eine Rückmeldung auf eine Statusanfrage oder einen Kalibrierbefehl an die Datenverarbeitungseinrichtung 3 übermittelt werden.

Insgesamt wird bei der zuvor beschriebenen Kommunikation zwischen der Datenverarbeitungseinrichtung 3 und den Messeinrichtungen 5 die im Rahmen der Austauschschritte stattfindende Datenübertragung zwischen Controller 7 und Messeinrichtungen 5 nicht beeinträchtigt.

Daneben ist es auch möglich, dass die Datenverarbeitungseinrichtung 3 ein digitales Datenpaket an den Controller 7 sendet, wobei dieses digitale Datenpaket die Kennung von wenigstens einer der Messeinrichtungen 5, ein Anfangssignal und eine erste digitale Nachricht enthält. Aufgrund des in diesem Datenpaket enthaltenen Anfangssignals wird das wiederholte Durchführen des digitalen Austauschens durch den Controller 7 unterbrochen, und der Controller 7 extrahiert die Kennung aus dem digitalen Datenpaket und sendet die digitale Nachricht direkt an die Messeinrichtung 5, der die in dem Datenpaket enthaltene Kennung zugewiesen ist.

Im Folgenden sendet die Datenverarbeitungseinrichtung 3 weitere digitale Datenpakete mit digitalen Nachrichten an den Controller 7, und der Controller 7 sendet diese digitalen Nachrichten an diejenige Messeinrichtung 5 weiter, der die Kennung aus dem ersten Datenpaket zugewiesen ist. Auf diese Weise können eine Vielzahl von digitalen Nachrichten, die beispielsweise ein Firmware-Update für eine Messeinrichtung 5 enthalten können, an eine bestimmte Messeinrichtung 5 gesendet werden, wobei in diesem Fall die regelmäßige Ausführung der digitalen Austauschschritte unterbrochen wird, das Empfangen analoger Messsignale aber weiter erfolgt.

Schließlich kann die Datenverarbeitungseinrichtung 3 ein digitales Datenpaket mit einer digitalen Nachricht und einem Endesignal an den Controller 7 senden, woraufhin das wiederholte Durchführen von digitalen Austauschschritten durch den Controller 7 wieder aufgenommen wird, also wieder in den Normalbetrieb gewechselt wird.

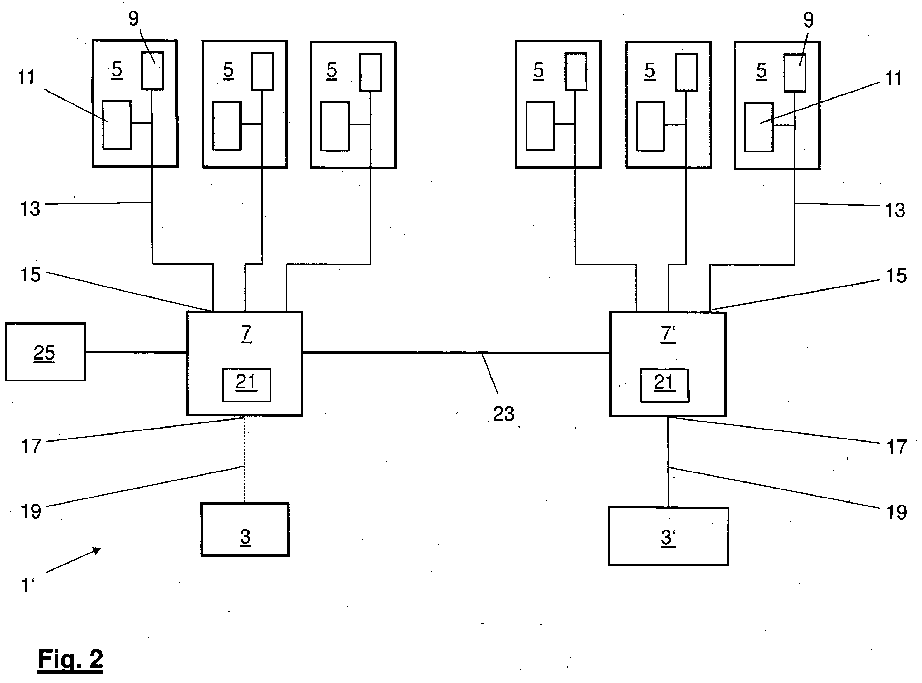

Das zweite, in Fig. 2 dargestellte Ausführungsbeispiel eines Messdatenerfassungssystems 1' umfasst neben einem ersten Controller 7 noch einen zweiten, mit dem ersten Controller 7 über eine Kabelverbindung 23 verbundenen Controller 7', mit dem ebenfalls eine Datenverarbeitungseinrichtung 3' über einen Anschluss 17 und eine Leitung 19 verbunden ist. An den zweiten Controller 7' sind ebenfalls eine Vielzahl von Messeinrichtungen 5 über Messleitungen 13 angeschlossen. Schließlich weist dieses Messdatenerfassungssystem 1' noch einen Aktor 25, beispielsweise in Form einer Warnleuchte, auf. Diese wird aktiviert, wenn einer der Controller 7, 7' bei einem Schwellwertvergleich mit einem von einer der Messeinrichtungen 5 erfassten Konzentrationswerte eine Überschreitung feststellt.

Im Übrigen kann das zuvor im Zusammenhang mit dem Messdatenerfassungssystem 1 aus Fig. 1 erläuterte Verfahren in gleicher Weise auch mit dem Messdatensystem 1' aus Fig. 2 ausgeführt werden.

Dabei wird jedoch so vorgegangen, dass dann wenn die Datenverarbeitungseinrichtung 3, die an den ersten Controller 7 angeschlossen ist, ein digitales Datenpaket an den Controller 7 sendet, in dem eine Kennung enthalten ist, die einer an dem zweiten Controller 7' angeschlossenen Messeinrichtung 5 zugewiesen ist, die digitale Nachricht zusammen mit der Kennung zunächst an den zweiten Controller 7' weitergeleitet wird, in dem dann die weiteren Schritte des Verfahrens ablaufen. Das bedeutet, dass die digitale Nachricht dann in dem Schiebespeicher 21 des zweiten Controllers 7' gespeichert und daraus wieder ausgelesen wird, wenn die schon erläuterte Bedingung für die freie Zeit bei dem zweiten Controller 7' erfüllt sind.

In Bezug auf das zunächst von der ersten Datenverarbeitungseinrichtung 3 gesendete digitale Datenpaket werden dann die weiteren Verfahrensschritte in dem zweiten Controller' 7 ausgeführt, wobei eine von der mit dem zweiten Controller 7' verbundenen Messeinrichtung 5 gesendete Antwortnachricht an den ersten Controller 7 übermittelt und dann an die erste Datenverarbeitungseinrichtung 3 gesendet wird.

Analog wird vorgegangen, wenn die zweite Datenverarbeitungseinrichtung ein digitales Datenpaket an den zweiten Controller 7' sendet, das eine Kennung enthält, die einer Messeinrichtung 5 zugewiesen ist, die an den ersten Controller 7 angeschlossen ist. In diesem Fall übernimmt der erste Controller 7 die Durchführung der Verfahrensschritte, und Antwortnachrichten werden an den zweiten Controller 7' gesendet, der diese dann an die zweite Datenverarbeitungseinrichtung 3' weiterleitet. An dieser Stelle ist darauf hinzuweisen, dass die Erfindung nicht darauf beschränkt ist, dass ein oder zwei Controller 7, 7' verwendet werden, sondern es kann auch eine größere Anzahl von Controllern in dem Messdatenerfassungssystem verwendet werden.

### Bezugszeichenliste

- 1, 1': Messdatenerfassungssystem
- 3, 3': Datenverarbeitungseinrichtung
- 5: Messeinrichtung
- 7, 7': Controller
- 9: Messelement
- 11: Kommunikationselement
- 13: Messleitung
- 15: Anschluss für Messleitung
- 17: Anschluss für Datenverarbeitungseinrichtung
- 19: Ethernetkabel
- 21: Schiebespeicher
- 23: Verbindungsleitung
- 25: Aktor

## Patentansprüche

1. Verfahren zur Datenübertragung zwischen Messeinrichtungen (5) und einer Datenverarbeitungseinrichtung (3, 3') in einem Messdatenerfassungssystem (1, 1'), das eine Vielzahl von Messeinrichtungen (5) und wenigstens einen Controller (7, 7') aufweist,
wobei jeder aus der Vielzahl von Messeinrichtungen (5) eine eindeutige Kennung zugewiesen ist,
wobei zwischen jeder Messeinrichtung (5) und dem Controller (7, 7') eine Messleitung (13) vorgesehen ist, die Messeinrichtungen (5) über die Messleitungen (13) analoge Messsignale an den Controller (7, 7') senden und zwischen dem Controller (7, 7') und den Messeinrichtungen (5) digitale Nachrichten über die Messleitungen (13) ausgetauscht werden,
wobei der Controller (7, 7') einen Anschluss (17) aufweist, über den die Datenverarbeitungseinrichtung (3, 3') mit dem Controller (7, 7') verbunden ist, sodass der Controller (7, 7') digitale Datenpakete von der Datenverarbeitungseinrichtung (3, 3') empfängt und digitale Datenpakete an die Datenverarbeitungseinrichtung (3, 3') sendet, und wobei das Verfahren Folgendes umfasst:
- Wiederholtes Durchführen von Austauschschritten durch den Controller (7, 7'), wobei ein Austauschschritt das Empfangen analoger Messsignale von den Messeinrichtungen (5) und/oder das digitale Austauschen digitaler Nachrichten zwischen den Messeinrichtungen (5) und dem Controller (7, 7') umfasst und wobei die Austauschschritte in einem vorgegebenen zeitlichen Abstand begonnen werden,
- Senden eines ersten digitalen Datenpakets durch die Datenverarbeitungseinrichtung (3, 3') an den Controller (7, 7'), wobei das erste digitale Datenpaket die Kennung von einer aus der Vielzahl von Messeinrichtungen (5) und eine erste digitale Nachricht enthält,
- Extrahieren der Kennung aus dem ersten digitalen Datenpaket durch den Controller (7, 7') und
- Senden der ersten digitalen Nachricht an die eine aus der Vielzahl von Messeinrichtungen (5) durch den Controller (7, 7') nach Beendigung des digitalen Austauschens,
wobei die erste digitale Nachricht in einem Schiebespeicher (21) gespeichert wird,
wobei der Controller (7, 7') nach Beendigung eines digitalen Austauschens die freie Zeit bestimmt, die bis zum Beginn des nächsten digitalen Austauschens verbleibt, und mit einer ersten Sendedauer vergleicht, die für das Senden der nächsten, vom Schiebespeicher (21) ausgegebenen digitalen Nachricht an die eine Messeinrichtung (5) benötigt wird, und
wobei die nächste, vom Schiebespeicher (21) ausgegebene digitale Nachricht gesendet und aus dem Schiebespeicher (21) gelöscht wird, wenn die freie Zeit größer als die erste Sendedauer ist,
wobei ein zweites digitales Datenpaket durch die Datenverarbeitungseinrichtung (3) an den Controller (7, 7') gesendet wird,
wobei das zweite digitale Datenpaket die Kennung von einer zweiten aus der Vielzahl von Messeinrichtungen (5) und eine zweite digitale Nachricht enthält,
wobei die zweite digitale Nachricht in dem Schiebespeicher (21) gespeichert wird,
wobei, wenn in dem Schiebespeicher (21) keine weiteren digitalen Nachrichten gespeichert sind, der Controller (7) die verbleibende zweite freie Zeit, die bis zum nächsten digitalen Austauschen verbleibt, mit einer zweiten Sendedauer vergleicht, die für das Senden der zweiten digitalen Nachricht an die zweite Messeinrichtung (5) benötigt wird, und wobei die zweite digitale Nachricht an die zweite Messeinrichtung (5) gesendet und aus dem Schiebespeicher (21) gelöscht wird, wenn die zweite freie Zeit größer als die zweite Sendedauer ist,
wobei, wenn weitere digitale Nachrichten in dem Schiebespeicher (21) vorhanden sind, die zweite freie Zeit, die bis zum nächsten digitalen Austauschen verbleibt, mit der Sendedauer verglichen wird, die für das Versenden der nächsten, aus dem Schiebespeicher (21) ausgegebenen digitalen Nachricht benötigt wird, und diese Nachricht versendet und aus dem Schiebespeicher (21) gelöscht wird, wenn die zweite freie Zeit größer als diese Sendedauer ist.

2. Verfahren nach Anspruch 1, wobei die eine Messeinrichtung (5) eine digitale Antwortnachricht als Antwort auf die von dem Controller (7, 7') gesendete erste digitale Nachricht an den Controller (7, 7') sendet und der Controller (7, 7') die digitale Antwortnachricht in einem digitalen Antwort-Datenpaket an die Datenverarbeitungseinrichtung (3, 3') sendet.

3. Verfahren nach Anspruch 1 oder 2, wobei der Controller (7, 7') nach Beendigung eines digitalen Austauschens die freie Zeit bestimmt, die bis zum Beginn des nächsten digitalen Austauschens verbleibt, und mit einer ersten Sendedauer vergleicht, die für das Senden der ersten digitalen Nachricht an die eine Messeinrichtung (5) benötigt wird,
wobei die erste digitale Nachricht gesendet wird, wenn die freie Zeit größer als die erste Sendedauer ist, und
wobei das Senden der ersten digitalen Nachricht nach dem Durchführen des nächsten digitalen Austauschens erfolgt, wenn die freie Zeit kleiner als die erste Sendedauer ist.

4. Verfahren nach einem der Ansprüche 1 bis 3, wobei die Datenverarbeitungseinrichtung (3, 3') ein digitales Datenpaket an den Controller (7, 7') sendet,
wobei das digitale Datenpaket die Kennung von einer aus der Vielzahl von Messeinrichtungen (5), ein Anfangssignal und eine erste digitale Nachricht enthält,
wobei das wiederholte Durchführen des digitalen Austauschens durch den Controller (7, 7') unterbrochen wird,
wobei der Controller (7, 7') die Kennung aus dem digitalen Datenpaket extrahiert und die digitale Nachricht an die eine Messeinrichtung (5) sendet,
wobei die Datenverarbeitungseinrichtung (3, 3') weitere digitale Datenpakete mit digitalen Nachrichten an den Controller (7, 7') sendet und der Controller (7, 7') die digitalen Nachrichten an die eine Messeinrichtung (5) sendet,
wobei die Datenverarbeitungseinrichtung (3, 3') ein digitales Datenpaket mit einer digitalen Nachricht und einem Endesignal an den Controller (7, 7') sendet und
wobei das wiederholte Durchführen des digitalen Austauschens, wobei das digitale Austauschen in einem vorgegebenen zeitlichen Abstand begonnen wird, durch den Controller (7, 7') wieder aufgenommen wird.

5. Controller (7, 7') ausgebildet zur Kommunikation mit einer Messeinrichtung (5) und einer Datenverarbeitungseinrichtung (3, 3') gemäß einem Verfahren nach einem der vorangehenden Ansprüche.

## Claims

1. Method for transmitting data between measuring devices (5) and a data processing device (3, 3') in a measurement data capture system (1, 1') having a multiplicity of measuring devices (5) and at least one controller (7, 7'),
wherein a unique identifier is allocated to each of the multiplicity of measuring devices (5),
wherein a measuring line (13) is provided between each measuring device (5) and the controller (7, 7'), the measuring devices (5) transmit analogue measurement signals to the controller (7, 7') via the measuring lines (13), and digital messages are interchanged between the controller (7, 7') and the measuring devices (5) via the measuring lines (13),
wherein the controller (7, 7') has a connection (17), via which the data processing device (3, 3') is connected to the controller (7, 7'), with the result that the controller (7, 7') receives digital data packets from the data processing device (3, 3') and transmits digital data packets to the data processing device (3, 3'), and wherein the method comprises the following:
- repeatedly performing interchange steps by means of the controller (7, 7'), wherein an interchange step comprises receiving analogue measurement signals from the measuring devices (5) and/or digitally interchanging digital messages between the measuring devices (5) and the controller (7, 7'), and wherein the interchange steps are started at a predefined interval of time,
- transmitting a first digital data packet to the controller (7, 7') by means of the data processing device (3, 3'), wherein the first digital data packet contains the identifier of one of the multiplicity of measuring devices (5) and a first digital message,
- extracting the identifier from the first digital data packet by means of the controller (7, 7'), and
- transmitting the first digital message to the one of the multiplicity of measuring devices (5) by means of the controller (7, 7') after the digital interchange has been terminated,
wherein the first digital message is stored in a shift memory (21),
wherein, after digital interchange has been terminated, the controller (7, 7') determines the free time remaining until the start of the next digital interchange and compares it with a first transmission period needed to transmit the next digital message output by the shift memory (21) to the one measuring device (5), and
wherein the next digital message output by the shift memory (21) is transmitted and is deleted from the shift memory (21) if the free time is greater than the first transmission period,
wherein a second digital data packet is transmitted to the controller (7, 7') by means of the data processing device (3),
wherein the second digital data packet contains the identifier of a second one of the multiplicity of measuring devices (5) and a second digital message, wherein the second digital message is stored in the shift memory (21),
wherein, if no further digital messages are stored in the shift memory (21), the controller (7) compares the remaining second free time remaining until the next digital interchange with a second transmission period needed to transmit the second digital message to the second measuring device (5), and wherein the second digital message is transmitted to the second measuring device (5) and is deleted from the shift memory (21) if the second free time is greater than the second transmission period,
wherein, if further digital messages are present in the shift memory (21), the second free time remaining until the next digital interchange is compared with the transmission period needed to transmit the next digital message output from the shift memory (21), and this message is transmitted and is deleted from the shift memory (21) if the second free time is greater than this transmission period.

2. Method according to Claim 1, wherein the one measuring device (5) transmits a digital response message to the controller (7, 7') as a response to the first digital message transmitted by the controller (7, 7'), and the controller (7, 7') transmits the digital response message in a digital response data packet to the data processing device (3, 3').

3. Method according to Claim 1 or 2, wherein, after digital interchange has been terminated, the controller (7, 7') determines the free time remaining until the start of the next digital interchange and compares it with a first transmission period needed to transmit the first digital message to the one measuring device (5),
wherein the first digital message is transmitted if the free time is greater than the first transmission period, and
wherein the first digital message is transmitted after the next digital interchange has been performed if the free time is less than the first transmission period.

4. Method according to one of Claims 1 to 3, wherein the data processing device (3, 3') transmits a digital data packet to the controller (7, 7'),
wherein the digital data packet contains the identifier of one of the multiplicity of measuring devices (5), an initial signal and a first digital message,
wherein the repeated performance of the digital interchange is interrupted by the controller (7, 7'),
wherein the controller (7, 7') extracts the identifier from the digital data packet and transmits the digital message to the one measuring device (5),
wherein the data processing device (3, 3') transmits further digital data packets containing digital messages to the controller (7, 7'), and the controller (7, 7') transmits the digital messages to the one measuring device (5),
wherein the data processing device (3, 3') transmits a digital data packet containing a digital message and a final signal to the controller (7, 7'), and
wherein the repeated performance of the digital interchange is resumed by the controller (7, 7'), wherein the digital interchange is started at a predefined interval of time.

5. Controller (7, 7') designed to communicate with a measuring device (5) and a data processing device (3, 3') in accordance with a method according to one of the preceding claims.

## Revendications

1. Procédé de transmission de données entre des dispositifs de mesure (5) et un dispositif de traitement de données (3, 3') dans un système d'acquisition de données de mesure (1, 1'), comprenant une pluralité de dispositifs de mesure (5) et au moins un contrôleur (7, 7'),
dans lequel chacun de la pluralité de dispositifs de mesure (5) se voit attribuer un identificateur unique,
dans lequel une ligne de mesure (13) est prévue entre chaque dispositif de mesure (5) et le contrôleur (7, 7'), les dispositifs de mesure (5) envoient au contrôleur (7, 7') des signaux de mesure analogiques par l'intermédiaire des lignes de mesure (13), et des messages numériques sont échangés entre le contrôleur (7, 7') et les dispositifs de mesure (5) par l'intermédiaire des lignes de mesure (13),
dans lequel le contrôleur (7, 7') comporte une connexion (17) par l'intermédiaire de laquelle le dispositif de traitement de données (3, 3') est relié au contrôleur (7, 7') de manière à ce que le contrôleur (7, 7') reçoive des paquets de données numériques en provenance du dispositif de traitement de données (3, 3') et envoie des paquets de données numériques au dispositif de traitement de données (3, 3'), et dans lequel le procédé comprend :
- l'exécution répétée d'étapes d'échange par le contrôleur (7, 7'), dans lequel une étape d'échange comprend la réception de signaux de mesure analogiques en provenance des dispositifs de mesure (5) et/ou l'échange numérique de messages numériques entre les dispositifs de mesure (5) et le contrôleur (7,7'), et
dans lequel les étapes d'échange sont lancées à un intervalle de temps prédéterminé,
- l'envoi au contrôleur (7, 7') d'un premier paquet de données numérique par le dispositif de traitement de données (3, 3'), dans lequel le premier paquet de données numérique contient l'identificateur de l'un de la pluralité de dispositifs de mesure (5) et un premier message numérique,
- l'extraction de l'identificateur à partir du premier paquet de données numérique par le contrôleur (7, 7') et
- l'envoi par le contrôleur (7, 7') du premier message numérique audit un de la pluralité de dispositifs de mesure (5) après l'achèvement de l'échange numérique,
dans lequel le premier message numérique est stocké dans un registre à décalage (21),
dans lequel le contrôleur (7, 7'), après l'achèvement d'un échange numérique, détermine le temps libre restant jusqu'au début de l'échange numérique suivant et le compare à une première durée d'envoi requise pour l'envoi du message numérique suivant fourni en sortie par la mémoire (21) audit un dispositif de mesure (5), et
dans lequel le message numérique suivant fourni en sortie par le registre à décalage (21) est envoyé et effacé du registre à décalage (21) lorsque le temps libre est supérieur à la première durée d'envoi,
dans lequel un deuxième paquet de données numérique est envoyé au contrôleur (7, 7') par le dispositif de traitement de données (3),
dans lequel le deuxième paquet de données numérique contient l'identificateur d'un deuxième de la pluralité de dispositifs de mesure (5) et un deuxième message numérique,
dans lequel le deuxième message numérique est stocké dans le registre à décalage (21),
dans lequel, lorsqu'aucun autre message numérique n'est stocké dans le registre à décalage (21), le contrôleur (7) compare le deuxième temps libre restant jusqu'à l'échange numérique suivant à une deuxième durée d'envoi requise pour l'envoi du deuxième message numérique au deuxième dispositif de mesure (5),
et dans lequel le deuxième message numérique est envoyé au deuxième dispositif de mesure (5) et est effacé du registre à décalage (21) lorsque le deuxième temps libre est supérieur à la deuxième durée d'envoi,
dans lequel, lorsque d'autres messages numériques sont présents dans le registre à décalage (21), le deuxième temps libre restant jusqu'à l'échange numérique suivant est comparé à la durée d'envoi requise pour l'envoi du message numérique suivant fourni en sortie par le registre à décalage (21), et ledit message est envoyé et effacé du registre à décalage (21) lorsque ledit deuxième temps libre est supérieur à ladite durée d'envoi.

2. Procédé selon la revendication 1,
dans lequel le premier dispositif de mesure (5) envoie un message de réponse numérique au contrôleur (7, 7') en réponse au premier message numérique envoyé par le contrôleur (7, 7') et le contrôleur (7, 7') envoie au dispositif de traitement des données (3, 3') le message de réponse numérique dans un paquet de données de réponse numérique.

3. Procédé selon la revendication 1 ou 2,
dans lequel le contrôleur (7, 7'), après l'achèvement d'un échange numérique, détermine le temps libre restant jusqu'au début de l'échange numérique suivant et le compare à une première durée d'envoi requise pour l'envoi du premier message numérique audit un dispositif de mesure (5),
dans lequel le premier message numérique est envoyé lorsque le temps libre est supérieur à la première durée d'envoi, et
dans lequel l'envoi du premier message numérique est effectué après l'exécution de l'échange numérique suivant lorsque le temps libre est inférieur à la première durée d'envoi.

4. Procédé selon l'une des revendications 1 à 3,
dans lequel le dispositif de traitement de données (3, 3') envoie au contrôleur (7, 7') un paquet de données numérique,
dans lequel le paquet de données numérique contient l'identificateur de l'un de la pluralité de dispositifs de mesure (5), un signal de début et un premier message numérique,
dans lequel l'exécution répétée de l'échange numérique par le contrôleur (7, 7') est interrompue,
dans lequel le contrôleur (7, 7') extrait l'identificateur à partir du paquet de données numérique et envoie le message numérique audit un dispositif de mesure (5),
dans lequel le dispositif de traitement de données (3, 3') envoie au contrôleur (7, 7') d'autres paquets de données numériques avec des messages numériques et le contrôleur (7, 7') envoie audit un dispositif de mesure (5) les messages numériques,
dans lequel le dispositif de traitement de données (3, 3') envoie au contrôleur (7, 7') un paquet de données numérique avec un message numérique et un signal de fin, et
dans lequel l'exécution répétée de l'échange numérique est reprise par le contrôleur (7, 7'), l'échange numérique étant lancé à un intervalle de temps prédéterminé.

5. Contrôleur (7, 7') apte à communiquer avec un dispositif de mesure (5) et un dispositif de traitement de données (3, 3') en conformité avec un procédé selon l'une des revendications précédentes.
